# EUROPEAN PATENT SPECIFICATION

(11) **EP 1 827 922 B1**
(45) Date of publication and mention of the grant of the patent: **21.01.2009**
(21) Application number: 05798772.9
(22) Date of filing: 03.11.2005
(51) Int. Cl.: B60R 22/03

(54) **A DEVICE FOR THE TRANSPORT OF A SEAT-BELT FITTING TO A GRIPPING POSITION**
VORRICHTUNG FÜR DEN TRANSPORT EINES SICHERHEITSGURTBESCHLAGS IN EINE GREIFPOSITION
DISPOSITIF POUR TRANSPORTER UNE FIXATION DE CEINTURE DE SECURITE DANS UNE POSITION D'ACCROCHAGE

(30) Priority: 11.11.2004 SE 0402744
(43) Date of publication of application: 05.09.2007
(73) Proprietor: Sundblad, Rolf, 182 39 Danderyd (SE)
(72) Inventor: Sundblad, Rolf, 182 39 Danderyd (SE)
(74) Representative: Janson, Ronny
(86) International application number: PCT/SE2005/001655
(87) International publication number: WO 2006/052186

(56) References cited:
- DE-A1- 3 302 356
- DE-A1- 4 409 564
- DE-A1- 10 204 940
- GB-A- 2 235 361
- US-A- 3 897 082
- US-A- 4 629 214

## Description

The invention relates to a device in order to present a seat-belt fitting on a belt strap belonging to a safety belt, in a comfortable gripping position of the kind that is seen in the preamble of claim 1.

DE 3 302 356 describes a device according to the preamble of claim 1.

Devices of the indicated kind are previously known in different embodiments. The known device comprises a resiliently elastic strap pre-formed into a helical shape, which is possible to drive out axially through a guiding, the end of the strap having a guiding that surrounds the belt strap and can displace the part of the strap enclosed by the guiding into a position near the belt locking. Typically, the free outer end of the strap element is displaceable from a resting position of the belt strap on one side of a driver's/passenger seat in a vehicle, to the other side of the seat, where the belt locking is located. The belt-strap part that extends through the guiding carries the seat-belt fitting near the guiding in such a way that a person sitting in the seat readily can seize the fitting and correctly connect the same to the locking that is located at a small distance from the presentation position of the fitting. In another previously known device of the kind in question, a curved telescopic bar pipe is utilized in order to displace the guiding loop surrounding the belt strap to the area of the belt locking.

The known devices have a complex structure and cannot readily be modified for the adaptation to the conditions in different car models having varying space conditions, desired paths of the displacement of the guiding between the end positions, and accommodation of the displacement element in the retracted end position thereof, respectively.

Therefore, an object of the invention is to provide a device, the strap sliding loop of which located on the end of the element readily can be driven to a selected position, wherein the rear end part of the elastic element readily can be given a selectable location in retracted position.

The object is entirely or partly attained by the invention.

The invention is defined in the appended claim 1.

Embodiments of the invention are defined in the appended dependent claims.

An important feature of the invention is that the elongate resiliently elastic element consists of a self-supporting close-coiled screw spring having substantially round cross section. The spring element may be pre-formed into a predetermined curvature. By the invention, the spring can readily be deflected in a freely selected axial plane by means of a knee-pipe fitting having selected change of direction between inlet and outlet. By the fact that the element has a substantially round cross section, the element can be rotated in the pipe fitting and/or the pipe fitting can be given a selectably rotary position in relation to the screw spring. The loop that is carried at the free end of the element can, in that connection, be displaced into a normal plane of the outlet axis of the knee-pipe fitting, and can further be displaced into a selected position in relation to a circular path centred to the axis in the normal plane, by rotation of the element around the axis thereof.

A sensor device may be provided in order to detect that the ignition of the vehicle engine is switched on, in order to, in that connection, activate a driving motor that displaces the front end of the screw spring axially and thereby the loop to a selected end position, for instance, in the area of the fitting locking. Another sensor may be arranged to detect that the belt-strap fitting is correctly received in the locking and in that connection retract the screw-spring element together with the loop thereof for the belt strap into a rest position of the belt strap, when said additional sensor detects that the car engine is in operation or that the ignition is switched off. The loop is arranged in order to allow radial insertion/withdrawing of the strap, for instance, by the fact that the loop is openable or has an interruption through which the strap may be thread. A rotation device may be provided in order to rotate the screw spring, preferably being pre-formed by bending, into a preselected rotation position.

The axial driving device for the screw spring may comprise a rotatable tooth wheel, which extends in an axial plane of the screw spring, the teeth of the tooth wheel engaging between turns of a winding of the screw spring. Alternatively, a screw rod may be coaxially fastened to the rear end of the screw spring, wherein a nut threadably co-operating with the screw rod can be rotated for the axial driving of the rod and thereby the screw spring. In that connection, a motor-operated cogwheel can engage a cogging around the circumference of the nut for the axial driving of the screw spring.

The screw-spring element may have a polygonal cross section and run through a guide sleeve having substantially the corresponding inner cross section, the guide sleeve being rotatable in order to convey the screw spring rotary-wise into a selectable rotary position around the axis thereof.

By the fact that the screw spring has a substantially round cross section, the rear end part thereof can be wound onto, for instance, a bobbin, which can be placed fairly freely in respect of position and axis orientation in the vehicle, thanks to the round cross section of the screw spring. The winding bobbin may, for instance, be prestressed in the direction of winding by a relatively weak force, which can be overcome by the axial driving device.

In the following, the invention will be described by way of examples, reference being made to the appended drawing.
- Fig. 1: schematically shows a view from the interior of a passenger car toward the side wall thereof, and illustrates the area of the B-pillar together with a device according to the invention in co-operation with a safety belt.
- Fig. 2: shows the object of Fig. 1 after activation of the device.
- Fig. 3: schematically shows a separate depiction of the device.
- Fig. 4: shows a view in the direction of the front side of a car seat, at which the device is mounted.
- Figs.: 5-7show some different feasible locations of the driving mechanism of the spring.

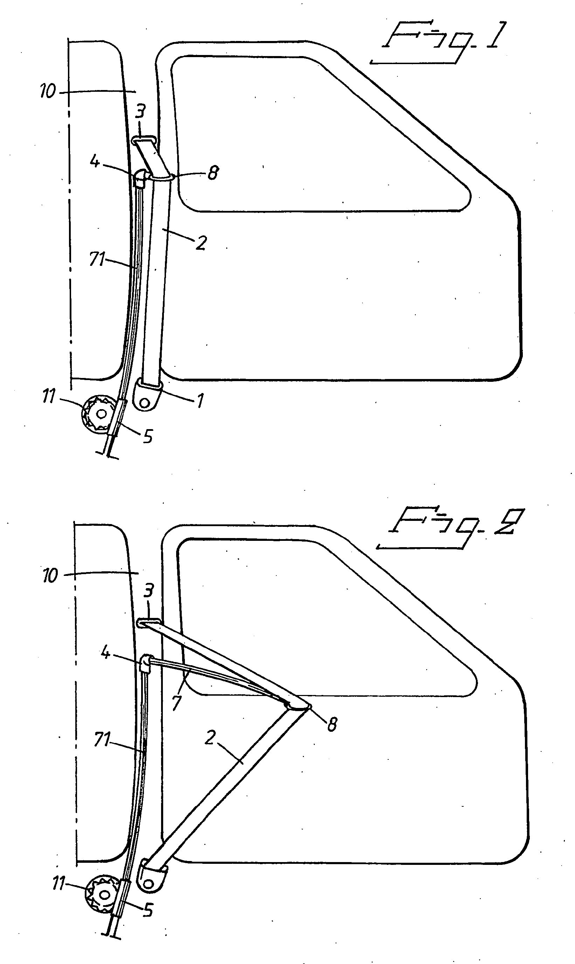

In Fig. 1, a car-belt strap 2 can be seen, which in the rest position extends vertically next to the inside of the B-pillar 10 between a lower fastener and an upper deflection fitting 3 to an acceleration-sensitive strap-latching device (not shown).

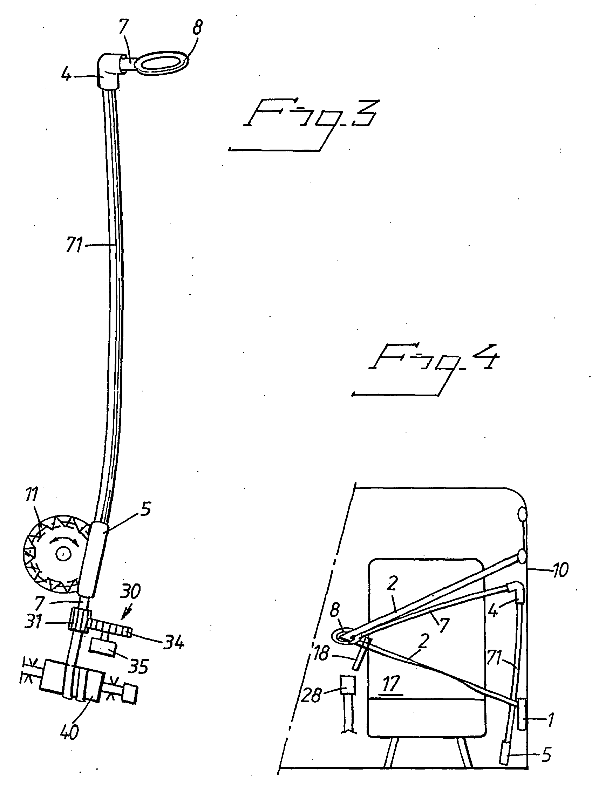

On the inside of the B-pillar at a small distance below the upper deflection fitting 3, there is a curved tubular element 4. At the lower end part of the B-pillar 10, there is a guide sleeve 5 for an elongate resiliently elastic screw spring 7, which also extends through the tubular element 4 and which at a free end thereof carries a preferably open or openable sliding loop 8 through which the belt strap 2 extends. The belt strap 2b is also a locking fitting 18 (Fig. 4) in the belt part 2 between the fastener 1 and the deflection fitting 3. The guide sleeve 5 has a side opening and a tooth wheel 11 that is rotary driven and that extends in an axial plane of the sleeve 5, and engages by the teeth thereof between the turns of a winding of the screw spring 7. The tooth wheel 10 is connected to a rotary driving for axial displacement of the screw spring 7 through the sleeve 5 and the pipe element 4. The pipe element 4 is shown curved in order to offer a selected change of direction of the element 7.

The screw spring 7 has a first axial end position, in which the loop thereof surrounds the belt strap 2 close by the B-pillar 10. The helical spring 7 is possible to drive out axially through the pipe element 4 into an outer axial position, in which the loop 8 and thereby the part thereof enclosed by the strap 2 is situated, for instance, in the area straight in front of the passenger sitting in the seat.

Fig. 4 illustrates that the screw spring 7 in the driven-out outer end position thereof can place the loop 8 with the strap section 2 passing the loop and the fitting 18 in the area of a locking 28 for the fitting 18, which is located on the opposite side of the seat 17 in relation to the B-pillar 10.

In Fig. 3, it can further be seen that a turning device 30 is provided in order to offer a selectable turning of the helical spring 7 around the axis thereof. In that connection, the helical spring 7 may have an out of round, for instance polygonal, cross section and be surrounded by a sleeve 31 having the corresponding interior cross section, so that the sleeve 31 can convey the helical spring 7 rotary-wise. On the outside, the sleeve 31 may have a cogging that co-operates with a cogwheel 34, which is connected to a motor 35 for selectable rotation.

The rear end part of the screw spring 7 can be received in a reception channel 41, which may be given a selectable extension such as adjustment to the space conditions in the vehicle. Alternatively or furthermore, the rear end of the helical spring 7 may be wound onto a bobbin 40, which may be prestressed in the direction of winding by a force that is overcome by the driving motor of the tooth wheel 11.

In one embodiment of the invention, the front end part of the screw spring 7 may be pre-formed into a curved extension. In this way, the front end part of the helical spring 7 will assume an extension that deviates from the outlet channel of the pipe elbow 4. Thereby, a rotation of the helical spring 7 by means of the rotation device 30 allows a transport of the loop 8 along a circular path, which is centred to the axis direction of the outlet axis of the pipe elbow 4.

A first sensor detects that the ignition of the vehicle is switched on and then activates the rotatory-driving motor of the tooth wheel 10 to propel the screw spring 7 and thereby the loop 8 into a preselected outer end position. A second sensor detects that the fitting 18 is received in the locking 28 and retracts the screw spring 7 and thereby the loop 8 into the initial position, on the assumption that the car engine is found to be in operation or that the car engine's ignition is switched off.

By the fact that the screw-spring element is relatively easy to deflect and can be directed into a curved path that is determined by the outlet direction of the pipe elbow 4 and the pre-bending of the front part of the screw spring 7, the belt strap and the fitting 18 can be led forward from the rest position along a well-adapted path around the front side of a person sitting in the seat 17, at which the device is mounted. The device according to the invention can easily be adapted to different car models and space conditions by alteration of the direction of the outlet direction of the pipe elbow 4, of the deflection of the screw spring 7 and the rotation of the screw spring around the axis thereof, as well as naturally the axial displacement distance of the loop 8.

A casing 71 may surround the screw spring 7 between the pipe element 4 and the sleeve 5.

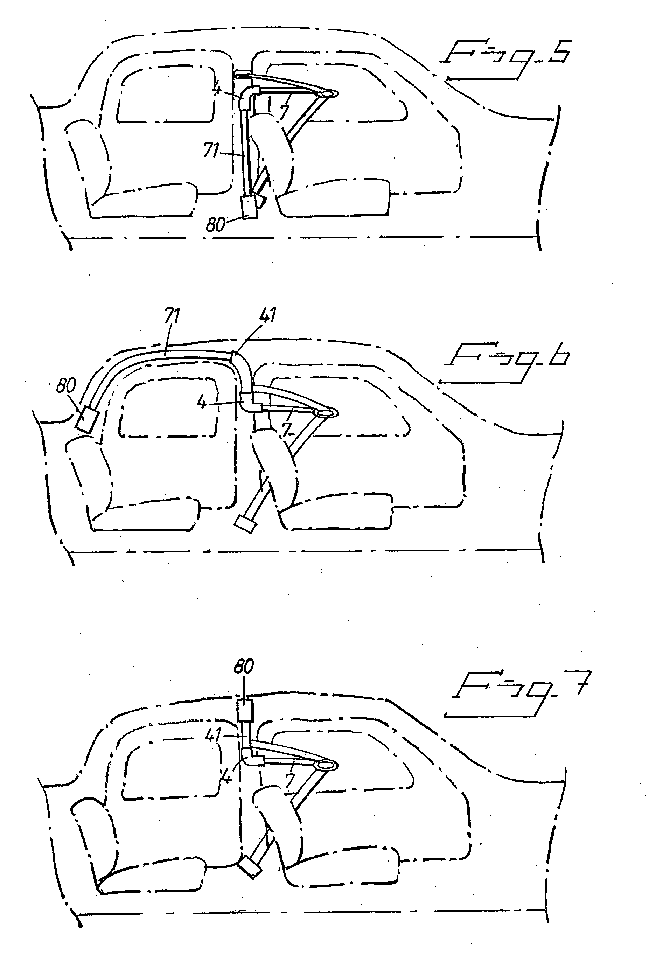

The driving mechanism 80 of the cable (including the axial driving device 11 of the spring, the rotary driving device 30 of the spring and possibly the winding/unwinding device 40 of the spring) can be placed at different places in the vehicle where suitable space is available, since the spring is deflectable and thereby can be led readily in a suitable path between the driving mechanism 80 and the guiding 4. For instance, the spring may be led in a selectable path through a flexible cable sleeve 71, such as has been discussed above. The cable sleeve may be anchored to and extend along fixed structures in the vehicle. If the path of the spring, in that connection, comprises one or more considerably curved portions, there instead the spring may be guided by a rigid and correspondingly curved sleeve 41, which may contain one or more bends. Figs. 5-7 show some different feasible locations of the driving mechanism 80 and show, in that connection, the extension of the spring 7 up to the guiding 4. Thus, from Fig. 5 it can be understood that the driving mechanism 80 is located at the A-pillar on the driver's side, near the floor, the spring extending upwards through a cable sleeve 7 to the guiding 4.

In Fig. 6, it can be seen that the driving mechanism 80 is located at the vehicle's side near the roof of the car body above or immediately behind the backrest of the back seat. In that connection, the cable extends from the mechanism 80 via a guide-cable sleeve 7, which extends along the roof next to the side of the car body up to the area of the A-pillar on the driver's side, where the cable is deflected downward to the guiding 4 by means of a sleeve 41, which offers stable deflection and extension of the cable along the A-pillar.

From Fig. 7, it can be understood that the driving mechanism 80 is mounted in the roof in the area between the A-pillars and that the cable extends downward along the A-pillar on the driver's side to the guide sleeve 4, wherein the spring 7 may extend along and close by the A-pillar, and near the roof, if the mechanism 70 is situated at a distance from the A-pillars, wherein the spring 7 once again may extend through a cable sleeve 71 and/or the guide sleeve 4.

Therefore, the device according to the invention can be adapted easily to different vehicle models and can also be retro-fitted in existing vehicles, thanks to the shown possibility of selectable location of the driving mechanism 80 and selectable extension of the spring 7 between the driving mechanism 80 and the guide sleeve 4.

## Claims

1. Device for the transport of a seat-belt fitting (18) on a strap (2) belonging to a safety belt into a gripping position in order to then be brought into engagement with an appurtenant fitting locking (28), which is located on a first side of a seat (17) in a vehicle; in a rest position, the belt strap being arranged to extend vertically next to a B-pillar (10) in the vehicle, on a second opposite side of the seat (17), a driving device (11) being arranged to axially drive an elongate resiliently elastic element (7) through a guiding (4) on said second side of the seat (17), at the free end thereof the elongate resiliently elastic element carrying a loop (8) surrounding the strap (2), and means being provided in order to retract the elongate resiliently elastic element (7) and thereby the loop (8) into the initial position thereof near the B-pillar (10), **characterized in that** the elongate resiliently elastic element (7) is in the form of a screw spring, which has a substantially round cross section and is rotatable in the guiding.

2. Device according to claim 1, **characterized in that** the screw spring (7) is pre-formed curvedly in the front end part thereof protruding from the guiding (4).

3. Device according to claim 1 or 2, **characterized in that** the axial driving device (5, 11) for the screw spring (7) comprises a rotatable tooth wheel (11), the teeth of which engage between turns of a winding of the screw spring (7), the tooth wheel extending substantially in an axial plane of the screw spring (7).

4. Device according to any one of claims 1-3, **characterized in that** the rear end part of the screw spring is received in a storage device (40).

5. Device according to any one of claims 1-4, **characterized in that** the guiding (4) is in the form of a curved pipe element.

6. Device according to any one of claims 1-5, **characterized in that** a rotary driving (31, 34, 35) is arranged to rotate the screw spring (7) and that the self-supporting front end part of the screw spring protruding from the guiding (4) is pre-formed curvedly.

## Patentansprüche

1. Vorrichtung für den Transport eines an einem Riemen (2) befindlichen Sitzgurt-Anbauteils (18), der zu einem Sicherheitsgurt gehört, in eine Greifposition, um dann in Eingriff mit einer zugehörigen Anbauteilverriegelung (28) gebracht zu werden, die auf einer ersten Seite eines Sitzes (17) in einem Fahrzeug angeordnet ist; wobei in einer Rastposition, der Gurtriemen so angeordnet ist, dass er sich vertikal neben einer B-Säule (10) in dem Fahrzeug erstreckt, wobei auf einer zweiten gegenüberliegenden Seite des Sitzes (17) eine Antriebsvorrichtung (11) angeordnet ist, um ein längliches federelastisches Element (7) durch eine auf der zweiten Seite des Sitzes (17) befindlichen Führung (4) axial zu bewegen, wobei das längliche federelastische Element (7) an seinem freien Ende eine Schlinge (8) trägt, die den Riemen (2) umgibt, und wobei Mittel vorgesehen sind, um das längliche federelastische Element (7) und damit die Schlinge (8) in ihre Anfangsposition nahe der B-Säule (10) zurückzuholen, **dadurch gekennzeichnet, dass** das längliche federelastische Element (7) die Form einer Schraubenfeder aufweist, die einen im Wesentlichen runden Querschnitt hat und in der Führung drehbar ist.

2. Vorrichtung gemäß Anspruch 1, **dadurch gekennzeichnet, dass** die Schraubenfeder (7) an ihrem vorderen Endteil gekrümmt vorgeformt ist, der von der Führung (4) hervorsteht.

3. Vorrichtung gemäß Anspruch 1 oder 2, **dadurch gekennzeichnet, dass** die Axialantriebsvorrichtung (5, 11) für die Schraubenfeder (7) ein drehbares Zahnrad (11) aufweist, dessen Zähne zwischen den Umläufen einer Wicklung der Schraubenfeder (7) eingreifen, wobei sich das Zahnrad im Wesentlichen in einer axialen Ebene der Schraubenfeder (7) erstreckt.

4. Vorrichtung gemäß irgendeinem der Ansprüche 1 bis 3, **dadurch gekennzeichnet, dass** der hintere Endteil der Schraubenfeder in einer Stauvorrichtung (40) aufgenommen ist.

5. Vorrichtung gemäß irgendeinem der Ansprüche 1 bis 4, **dadurch gekennzeichnet, dass** die Führung (4) die Form eines gekrümmten Rohrelements aufweist.

6. Vorrichtung gemäß irgendeinem der Ansprüche 1 bis 5, **dadurch gekennzeichnet, dass** ein Drehantrieb (31, 34, 35) vorgesehen ist, die Schraubenfeder (7) zu drehen und dass der selbst-unterstützende vordere Endteil der Schraubenfeder, der von der Führung (4) hervorsteht, gekrümmt vorgeformt ist.

## Revendications

1. Dispositif pour le déplacement d'un montage pour ceinture de sécurité (18) sur une courroie (2) appartenant à une ceinture de sécurité dans une position de fixation à fin de le rattacher à un montage de verrouillage correspondant (28) localisé sur un premier côté d'un siège (17) dans un véhicule ; dans une position de repos, la ceinture de sécurité étant agencée pour s'étendre verticalement à côté d'un second pied (10) dans le véhicule, sur un second côté opposé du siège (17), une commande (11) étant adaptée pour axialement diriger un élément élastique oblong (7) à travers un guidage (4) sur le second côté du siège (17), sur son côté libre, l'élément élastique oblong étant pourvu d'une boucle (8) entourant la courroie (2), et des moyens étant adaptés pour rétracter l'élément élastique oblong (7) et de ce fait la boucle (8) dans sa première position à côté du second pied (10), **caractérisé en ce que** l'élément élastique oblong (7) est sous forme d'un ressort à écrou, qui a une section essentiellement circulaire et qui est rotatif dans le guidage.

2. Dispositif selon la revendication 1, **caractérisé en ce que** le ressort à écrou (7) est préformé en forme de coude dans sa partie antérieure faisant saillie du guidage (4).

3. Dispositif selon une des revendications 1 ou 2, **caractérisé en ce que** le dispositif de commande axial (5,11) pour le ressort à écrou (7) comprend une roue d'engrenage rotatif (11), dont les dents engrènent entre les tours d'un bobinage du ressort à écrou (7), la roue d'engrenage s'étendant essentiellement dans un plan axial du ressort à écrou (7)

4. Dispositif selon une des revendications 1 à 3, **caractérisé en ce que** la partie postérieur du ressort à écrou est reçue dans un dispositif de stockage (40).

5. Dispositif selon une des revendications 1 à 4, **caractérisé en ce que** le guidage (4) est un élément tubulaire courbé.

6. Dispositif selon une des revendications 1 à 5, **caractérisé en ce que** la commande rotatif (31, 34, 35) est adaptée pour faire tourner le ressort à écrou (7) et que la partie antérieur autoporteur du ressort à écrou faisant sailli du guidage (4) est préformée en forme de coude
